# EUROPEAN PATENT APPLICATION

(11) **EP 4 258 563 A1**
(43) Date of publication of application: **11.10.2023**
(21) Application number: 21899621.3
(22) Date of filing: 05.08.2021
(51) Int. Cl.: H04B 1/401

(54) **SIGNAL TRANSCEIVING CIRCUIT AND METHOD, CIRCUIT BOARD ASSEMBLY, TERMINAL, AND STORAGE MEDIUM**

(30) Priority: 04.12.2020 CN 202011414087
(71) Applicant: ZTE Corporation, Shenzhen, Guangdong 518057 (CN)
(72) Inventor: WANG, Kai, Shenzhen, Guangdong 518057 (CN)
(74) Representative: Deambrogi, Edgardo
(86) International application number: PCT/CN2021/110954
(87) International publication number: WO 2022/116582

(57) **Abstract**

The present disclosure relates to the technical field of communications. Provided are a signal transceiving circuit and method, a circuit board assembly, a terminal, and a storage medium. The signal transceiving circuit includes: N dual-frequency devices and N antennas, N is an integer greater than or equal to 2; the N dual-frequency devices have a first end, a second end, and a third end; the third ends of the N dual-frequency devices are correspondingly connected to the N antennas to form N signal channels; the N signal channels are respectively configured to transmit first signals; the first ends of the dual-frequency devices in the N signal channels is configured to access the first signals; at least one of the N signal channels is further configured to transmit a second signal, and the second end of the dual-frequency devices in the signal channel configured to transmit the second signal is configured to access the second signal; the frequency band of the first signal is different from that of the second signal.

## Description

### Cross-Reference to Related Disclosure

This disclosure is based upon and claims priority to Chinese Patent Disclosure No. 202011414087.9, filed on 04 December 2020, the entire disclosure of which is incorporated herein by reference.

### Technical Field

The present disclosure relates to the field of communications technologies, and in particular to a signal transceiving circuit and method, circuit board assembly, terminal, and storage medium.

### Background

In some cases, a terminal simultaneously transmits an N78 frequency band signal and an actual data transmission rate of a WiFi 5G frequency band signal, the theoretical data transmission rate is not achieved, and even the actual data transmission rate will be lower than the data transmission rate at which the terminal only transmits signals of the N78 frequency band. This results in that the advantages of the terminal supporting both the 5G mobile network and the WiFi 5G network in data transmission performance cannot be fully utilized.

### Summary

The embodiments of the present disclosure provide a signal transceiving circuit, including: N dual-frequency devices and N antennas; N is an integer greater than or equal to 2; the N dual activators have a first end, a second end and a third end respectively; the third ends of the N dual-frequency devices are correspondingly connected to the N antennas respectively to form N signal channels; the N signal channels are respectively used for transmitting a first signal, and the first end of dual-frequency devices in the N signal channels is used for accessing the first signal; at least one signal channel among the N signal channels is further configured to transmit a second signal, and the second end of the dual-frequency devices in the signal channel configured to transmit the second signal is configured to access the second signal; wherein a frequency band of the first signal is different from a frequency band of the second signal.

An embodiment of the present disclosure further provides a circuit board assembly, including the signal transceiving circuit.

An embodiment of the present disclosure also provide a signal transceiving method based on a signal transceiving circuit. The signal transceiving circuit includes N dual-frequency devices and N antennas. The N dual-frequency devices respectively have a first end, a second end and a third end. The third ends of the N dual-frequency devices are correspondingly connected to the N antennas respectively to form N signal channels; the method includes: controlling the N signal channels in the signal transceiving circuit to sequentially transmit a first signal, and respectively acquiring a first performance parameters of the N signal channels; wherein the first end of the dual-frequency device in the N signal channels is configured to access a first signal; selecting a target signal channel according to the first performance parameters of the N signal channels; transmitting a second signal through a target signal channel, wherein the second end of the dual-frequency device in the target signal channel is used to access the second signal.

An embodiment of the present disclosure further provides a terminal, including: at least one processor; and a memory communicatively coupled to the at least one processor; the memory stores an instruction executable by the at least one processor, wherein the instruction is executed by the at least one processor, so that the at least one processor can execute the signal transceiving method based on the signal transceiving circuit.

An embodiment of the present disclosure further provides a computer readable storage medium, storing a computer program,when the computer program is executed by a processor, the signal transceiving method based on the signal transceiving circuit is implemented.

### Brief Description of the Drawings

Fig. 1 is a schematic block diagram of a signal transceiving circuit according to a first embodiment of the present disclosure;
Fig. 2 is a schematic block diagram of a signal transceiving circuit provided with four signal channels according to a first embodiment of the present disclosure;
Fig. 3 is a schematic block diagram of a signal transceiving circuit which a signal channel is fixedly connected to a second transceiver according to the first embodiment of the present disclosure;
Fig. 4 is a schematic block diagram of a signal transceiving circuit according to a second embodiment of the present disclosure;
Fig. 5 is a schematic block diagram of a signal transceiving circuit according to a third embodiment of the present disclosure;
Fig. 6 is a specific flowchart of a signal transceiving method based on a signal transceiving circuit according to a fifth embodiment of the present disclosure;
Fig. 7 is a specific flowchart of a signal transceiving method based on a signal transceiving circuit according to a sixth embodiment of the present disclosure;
Fig. 8 is a schematic block diagram of a terminal according to a seventh embodiment of the present disclosure.

### Detailed Description of the Embodiments

In order to make the objectives, technical solutions, and advantages of the embodiments of the present disclosure clearer, the following describes each embodiment of the present disclosure in detail with reference to the drawings. However, a person of ordinary skill in the art may understand that, in the embodiments of the present disclosure, many technical details are put forward to help a reader understand the present disclosure better. However, even without these technical details and various changes and modifications based on the following embodiments, the claimed technical solutions of the present disclosure can be implemented. Dividing of the following embodiments is for convenience of description, and shall not constitute any limitation to specific implementations of the present disclosure. The embodiments may be referred to in combination with each other without any contradiction.

With the rapid development of the 5G network, related products of the 5G network continuously enter the market, and some terminals support simultaneous transmission of data between the 5G mobile network and the WiFi 5G network. For example, a terminal supporting Multi Input Multi Output (mimo) technology is separately provided with a plurality of first signal transmission channels for N78 frequency band signals in a 5G mobile network, and one or more second signal transmission channels of a WiFi 5G frequency band signal in a WiFi 5G network, wherein each first signal transmission channel and each second signal transmission channel are respectively connected to an antenna, being used for transmitting an N78 frequency band signal and a WiFi 5G frequency band signal respectively. Theoretically, when the terminal simultaneously transmits signals of the two frequency bands, the data transmission rate should be equal to the sum of the data transmission rates of the signals of the two frequency bands transmitted separately by the terminal; thus, the advantage of the terminal supporting both the 5G mobile network and the WiFi 5G network in data transmission performance is realized.

However, in actual operations, it is found that in some cases, the terminal transmits the actual data transmission rates of the signals of the two frequency bands at the same time, the theoretical data transmission rate is not achieved, and even the actual data transmission rate will be lower than the data transmission rate at which the terminal only transmits signals of the N78 frequency band. This results in that the advantages of the terminal supporting both the 5G mobile network and the WiFi 5G network in data transmission performance cannot be fully utilized.

The main purpose of the embodiments of the present disclosure is to provide a signal transceiving circuit and method, circuit board assembly, terminal, and storage medium, which provide a structural basis for selecting a suitable signal channel according to transmission performance requirements so as to simultaneously transmit signals of different frequency bands. In this way, when signals of different frequency bands are simultaneously transmitted in a selected signal channel, data transmission performance of a signal transceiving circuit meets a preset requirement, for example, the demand for optimal overall data transmission performance is satisfied.

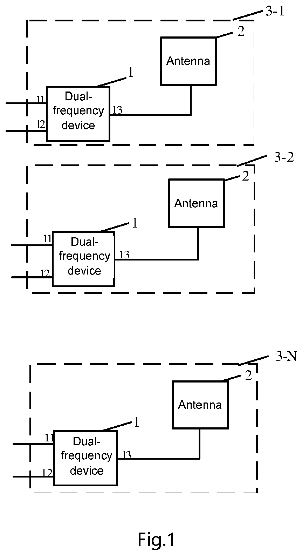

A first embodiment of the present disclosure relates to a signal transceiving circuit, which is arranged inside a terminal, and provides a structural basis for selecting an appropriate signal channel to simultaneously transmit signals of two different frequency bands according to data transmission performance requirements. This helps improve the data transmission performance of a signal transceiving circuit. Referring to Fig. 1, the circuit includes N dual-frequency devices 1 and N antennas 2, N is an integer greater than or equal to 2, and N dual-frequency devices 1 respectively have a first end 11, a second end 12, and a third end 13; a third end 13 of the N dual-frequency devices 1 is correspondingly connected to the N antennas 2 respectively to form N signal channels, which are respectively 3-1, 3-2, ..., 3-N, and the N signal channels are respectively used for transmitting a first signal. A first end 11 of a dual-frequency devices 1 in N signal channels is used for receiving a first signal, at least one signal channel in the N signal channels is further used for transmitting a second signal, and a second end 12 of the dual-frequency devices 1 in the signal channel used for transmitting the second signal is used for receiving the second signal, wherein the frequency band of the first signal is different from that of the second signal.

The implementation details of the signal transceiving circuit in this implementation are described in detail in the following. The following content is only for ease of understanding and is not a requirement for implementing this solution.

In an example, for a terminal supporting the mimo technology, N signal channels may all serve as main channels for transceiving a first signal, only a part of signal channels may serve as main channels for transceiving the first signal, and other signal channels serve as mimo channels only for receiving the first signal.

In an example, the first signal and the second signal are adjacent frequency bands, and may be signals of adjacent frequency bands belonging to the same network standard, or signals of adjacent frequency bands belonging to different network standards, or the first signal and the second signal are signals of two frequency bands having mutual interference. For example, the first signal and the second signal may be signals of N78 frequency bands and signals of a WiFi 5G frequency band that belong to different network standards, respectively, where the N78 frequency band and the WiFi 5G frequency band are adjacent frequency bands.

The present disclosure mainly uses transmission of a first signal, i.e. when a first signal is transmitted in each signal channel, according to data transmission performance of each signal channel, at least one signal channel satisfying a pre-set requirement is selected to transmit a second signal, so as to ensure data transmission performance of the whole terminal. In an actual operation, a terminal has a higher data transmission rate when only a signal of an N78 frequency band is transmitted, and has a lower data transmission rate when only a signal of a WiFi 5G frequency band is transmitted; therefore, a signal of an N78 frequency band is generally used as a first signal, and a signal of a WiFi 5G frequency band is generally used as a second signal.

In an example, a detection device may be used to select a target signal channel for transmitting the second signal before the signal transceiving circuit is shipped. Specifically, N signal channels are separately connected to N first transceivers for transceiving a first signal, a detection interface of a detection device is respectively connected to each first transceiver for detecting performance parameters of N signal channels via each first transceiver, N first transceivers transmit first signals on N signal channels in sequence, and a detection device may pass through each first transceiver, respectively acquiring first performance parameters of N signal channels, in which the first performance parameters may be Reference Signal Receiving Power (RSRP) and/or a Received Signal Strength Indication (RSSI); a detection device, according to first performance parameters and data transmission performance requirements of N signal channels, selects at least one signal channel for transmitting a second signal as a target signal channel.

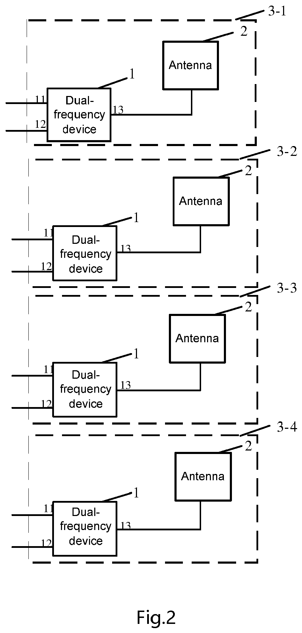

The number of signal channels N being four is taken as an example for detailed description below, please refer to Fig. 2, but does not limit the number of signal channels in this disclosure.

Assuming that four signal channels are a signal channel 3-1, a signal channel 3-2, a signal channel 3-3, and a signal channel 3-4, when only the signal channel 3-1 transmits the first signal, the detection device obtains the first performance parameter of the signal channel 3-1 from the first transceiver that is correspondingly connected to the signal channel 3-1; when only the signal channel 3-2 transmits the first signal, the detection device obtains the first performance parameter of the signal channel 3-2 from the first transceiver that is correspondingly connected to the signal channel 3-2. By analogy, the detection device separately obtains the first performance parameters of the four signal channels.

When only one target signal channel needs to be selected, among four signal channels, a signal channel with a maximum RSRP/RSSI value may be selected as a target signal channel, and one target signal channel may also be selected in combination with RSRP and RSSI, for example, a signal channel with a maximum RSRP and RSSI average value is selected as a target signal channel; when a plurality of target signal channels need to be selected, RSRP/RSSI values of four signal channels may be sorted in descending order, and a plurality of signal channels are selected from the descending order as target signal channels.

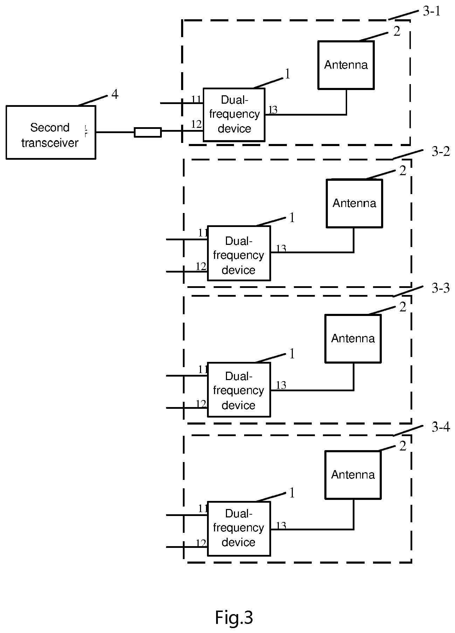

After the target signal channel is selected, a transceiving end of a second transceiver 4 used for transceiving a second signal may be manually fixedly connected to a second end 12 of a dual-frequency devices 1 of the target signal channel, for example, by connecting the two via a resistor R. Specifically, two ends of the resistor R are welded with the transceiving end of the second transceiver 4 and the second end 12 of the dual-frequency devices 1 of the target signal channel respectively. Please refer to Fig. 3, in the figure, N is equal to 4, and a signal channel 3-1 is selected as a target signal channel, so that the target signal channel fixedly transmits a second signal.

In an example, an additional filter may be added between the dual-frequency devices 1 and the antenna 2, or filtering performance of an existing filter in the first transceiver for transceiving the first signal is improved, so as to further reduce interference between signal channels, thereby helping improve data transmission performance of the signal transceiving circuit.

In the present embodiment, a signal transceiving circuit includes N dual-frequency devices and N antennas, wherein the N dual-frequency devices are respectively correspondingly connected to the N antennas to form N signal channels, a first signal is transmitted in each of the N signal channels, and a second signal having a frequency band different from that of the first signal is transmitted in at least one signal channel; compared with the case that, once the circuit structure is designed, positions of transmission channels for transmitting signals are fixed and cannot be changed, in this embodiment, the signal channel for transmitting the second signal may be selected from N signal channels, that is, the position of the signal channel for transmitting the second signal is changeable. In this way, a structural basis is provided for selecting an appropriate signal channel to transmit a second signal according to a data transmission performance requirement. In addition, a dual-frequency devices itself has a certain filtering capability, which can reduce interference between different signal channels, thereby helping to improve data transmission performance of a signal transceiving circuit.

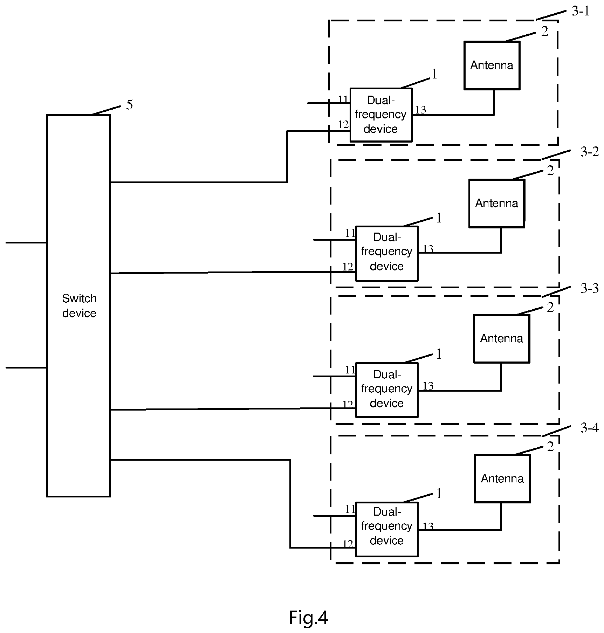

A second embodiment of the present disclosure relates to a signal transceiving circuit. The second embodiment is substantially the same as the first embodiment, and differs in that, referring to Fig. 4, the signal transceiving circuit further includes a switching device 5.

In the figure, N is equal to 4 is taken as an example for illustration. Generally, two transceivers are used to receive and transmit signals of a WiFi 5G frequency band, and therefore, in the figure, two second transceivers 4 are taken as an example for illustration.

The second ends 12 of the N dual-frequency devices 1 are connected to a switching device 5 respectively. The number of the switching device 5 may be one or more. Fig. 2 shows an example in which the number of the switching device 5 is one. When the number of the switching device 5 is one, the switching device 5 may be a multi-pole multi-throw switch. For example, when the number of the second transceiver 4 receiving the second signal is one, the switching device 5 to be set is a single-pole four-throw switch (not shown in the figure), and an input end of the single-pole four-throw switch is connected to the second transceiver 4, and any one signal channel of the four signal channels may be selected as a target signal channel, connecting an output end to a second end 12 of a dual-frequency devices 1 of a target signal channel, so that the target signal channel transmits a second signal; when the number of the second transceivers 4 which transmit and receive the second signal is two, the switching device 5 that needs to be set is a double-pole four-throw switch (not shown in the figure), two input ends of the double-pole four-throw switch are respectively connected to two second transceivers 4, and at most two target signal channels are selected from four signal channels. The four output ends are respectively connected to the second end 12 of the dual-frequency devices 1 of the target signal channel, so that the target signal channel transmits a second signal.

When there are a plurality of switching device 5, the switching device 5 may be a single-pole single-throw switch, and two ends of each single-pole single-throw switch are connected to the second end 12 of the dual-frequency devices 1 and the transceiving end of the second transceiver 4 of the corresponding signal channel, and a controller may be used to control the on/off state of each switching device 5. When a switching device is in a closed state, a second transceiver 4 connected to the switching device is connected to a signal channel, so that a second signal is accessed in the signal channel; when a switching device is in a disconnected state, a second transceiver 4 connected to the switching device is in a disconnected state with respect to a signal channel, and therefore, a second signal cannot be accessed in the signal channel. By means of the described control method, in N signal channels, only a target signal channel can be controlled to access a second signal.

A processor may select, according to data transmission performance of each signal channel acquired in real time, a target signal channel of which data transmission performance satisfies a pre-set requirement, and then a controller controls an on/off state of a switching device 5, so that the target signal channel accesses a second signal.

In this embodiment, a switching device disposed in a signal transceiving circuit provides a structural basis for selecting an appropriate signal channel to transmit a second signal according to a transmission performance requirement. Furthermore, in a process in which a terminal is used, a controller controls a switch state of a switching device according to a target signal channel selected in real time, so that the target signal channel accesses a second signal, thereby enhancing the real-time performance of a signal transceiving circuit selecting a suitable signal channel.

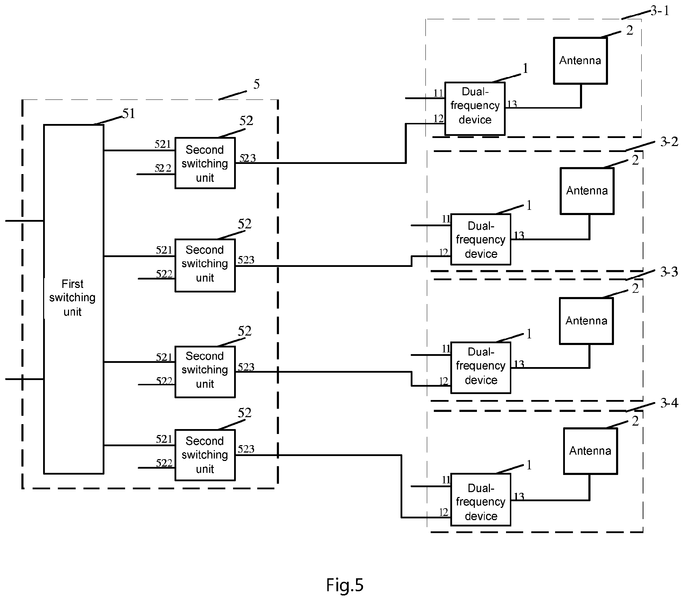

A third embodiment of the present disclosure relates to a signal transceiving circuit. The third embodiment is substantially the same as the second embodiment, and differs in that, referring to Fig. 5, a switching device 5 includes a first switching units 51 and N second switching units 52, and N is illustrated by taking N being equal to 4 as an example.

The N second switching units 52 respectively have a first end 521, a second end 522 and a third end 523, and the third ends 523 of the N second switching units 52 are correspondingly connected to the second ends 12 of the dual-frequency devices 1 in the N signal channels respectively, first ends 521 of N second switching units 52 are respectively connected to a first switching units 51, the first switching units 51 is used for connecting a first candidate signal to a second switching units 52 corresponding to a target signal channel, and second ends 522 of N second switching units 52 are respectively used for connecting a second candidate signal; the N second switching units 52 are configured to take a first candidate signal or a second candidate signal as a second signal to access the dual-frequency devices 1 in the target signal channel.

In an example, the second switching units 52 may be a single-pole double-throw switch, and in this case, the first end 521 and the second end 522 are two input ends of the single-pole double-throw switch, the third terminal 523 is an output terminal of the single-pole double-throw switch, a dual-frequency devices 1 for taking one of a first candidate signal and a second candidate signal as a second signal to access a target signal channel.

In an example, frequency bands of a first candidate signal and a second candidate signal at least partially overlap, where the first signal and the first candidate signal are signals in different network standards, a first candidate signal and a second candidate signal can respectively be a signal of a WiFi 5G frequency band and a signal of an N79 frequency band, in which the first signal can be a signal of an N78 frequency band, and neither the signal of the N78 frequency band nor the signal of the WiFi 5G frequency band nor the signal of the N79 frequency band belongs to the same network standard.

The first candidate signal is a signal of a WiFi 5G frequency band, the second candidate signal is a signal of an N79 frequency band, and the first signal is a signal of an N78 frequency band, and the number N of signal channels is four, which are used as examples for detailed description below, but are not specifically limited to the first candidate signal, the second candidate signal, the first signal, and the number of signal channels in the present disclosure.

Since the frequency band of the WiFi 5G frequency band is approximately the same as that of the N79 frequency band, and both the WiFi 5G frequency band and the N79 frequency band belong to frequency bands of different network standards from the N78 frequency band, it can be approximately considered that a signal of the WiFi 5G frequency band and a signal of the N79 frequency band have approximately the same interference to the signal of the N78 frequency band, and therefore, the selection method in the first embodiment of the present disclosure can still be used to select a target signal channel, only when a second signal is specifically accessed in a target signal channel, a second switching units 52 controls a signal of a WiFi 5G frequency band to be accessed as a second signal into the target signal channel, or a signal of an N79 frequency band to be accessed as a second signal into the target signal channel. It should be noted that, in a same signal transceiving circuit, all target signal channels simultaneously transmit signals of an N78 frequency band and signals of a WiFi 5G frequency band, or simultaneously transmit signals of an N78 frequency band and signals of an N79 frequency band.

In this embodiment, the switching device disposed in the signal transceiving circuit includes a first switching unit and a second switching unit, so that the target signal channel can choose to simultaneously transmit a signal of an N78 frequency band and a signal of a WiFi 5G frequency band, or simultaneously transmit a signal of an N78 frequency band and a signal of a WiFi 5G frequency band. Therefore, according to performance of a signal of a WiFi 5G frequency band and a signal of an N79 frequency band in real time, it may be selected to simultaneously transmit a better frequency band signal and a signal of an N78 frequency band in a target signal channel according to performance of the signal of the WiFi 5G frequency band and performance of the signal of the N79 frequency band.

A fourth embodiment of the present disclosure relates to a circuit board assembly, including the signal transceiving circuit of the above embodiment.

A fifth embodiment of the present disclosure relates to a signal transceiving method based on a signal transceiving circuit, which is applied to a terminal supporting multi-band signal transceiving. The signal transceiving method in this embodiment is based on any one of the signal transceiving circuits in the first to third embodiments of the present disclosure.

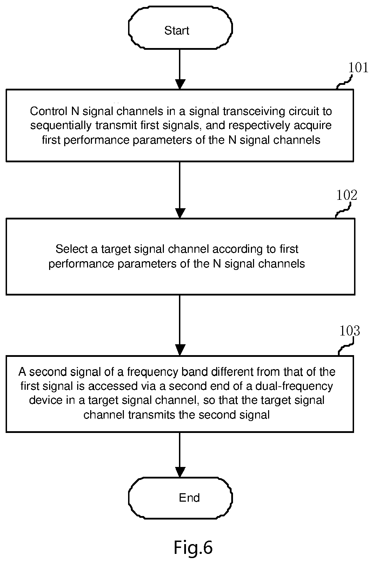

The specific flow of the signal transceiving method based on the signal transceiving circuit in this embodiment is shown in Fig. 6.

Step 101, control N signal channels in a signal transceiving circuit to sequentially transmit a first signal, and obtain first performance parameters of the N signal channels respectively.

Step 102, select a target signal channel according to first performance parameters of the N signal channels.

Step 103, a second signal of a frequency band different from that of the first signal is accessed through a second end of the dual-frequency devices in the target signal channel, so that the target signal channel transmits the second signal.

At Step 101, first ends of dual-frequency devices in N signal channels are respectively correspondingly connected to N first transceivers for transceiving a first signal, so as to control the first transceivers to sequentially transmit the first signal in the N signal channels, that is, control only one signal channel to transmit the first signal in the N signal channels at the same time. In an example, the first signal may be a signal of an N78 frequency band. Sequentially transmitting first signals for N signal channels, and respectively acquiring first performance parameters of the N signal channels.

At Step 102, a target signal channel is selected from the N signal channels according to the first performance parameters of the N signal channels, where the number of the target signal channels may be one or more. When there is only one second transceiver for transceiving a second signal in a terminal, the second signal can only be accessed in one signal channel, and thus the number of target signal channels is one; when a terminal supports the mimo technology, there are a plurality of second transceivers for transceiving second signals, and the second signals can be respectively accessed in a plurality of signal channels; therefore, there can be a plurality of target signal channels, and the number of target signal channels can be less than that of the second transceivers, i.e. only a part of the second transceivers can be selected to receive and send the second signals.

In addition, for a terminal supporting the mimo technology, N signal channels may all be used as main channels for transceiving a first signal, only a part of signal channels may be used as main channels for transceiving the first signal, and other signal channels are used as mimo channels only for receiving the first signal.

For example, referring to Fig. 2, when only the signal channel 3-1 transmits the first signal, the detection device obtains the first performance parameter of the signal channel 3-1 from the first transceiver that is correspondingly connected to the signal channel 3-1; when only the signal channel 3-2 transmits the first signal, the detection device obtains the first performance parameter of the signal channel 3-2 from the first transceiver that is correspondingly connected to the signal channel 3-2. By analogy, the detection device separately obtains the first performance parameters of the four signal channels.

When only one target signal channel needs to be selected, among four signal channels, a signal channel with a maximum RSRP/RSSI value may be selected as a target signal channel, and one target signal channel may also be selected in combination with RSRP and RSSI, for example, a signal channel with a maximum RSRP and RSSI average value is selected as a target signal channel; when a plurality of target signal channels need to be selected, RSRP/RSSI values of four signal channels may be sorted in descending order, and a plurality of signal channels are selected from the descending order as target signal channels.

In one example, the second signal may be a signal of the WiFi 5G band or a signal of the N79 band.

In an example, a switching device is further disposed in the signal transceiving circuit. For a specific structure, refer to Fig. 4. A target signal channel for transmitting a second signal may be selected by controlling the switching device. The first signals are transmitted on N signal channels in sequence, and specifically, the switching device may be controlled to enable the N signal channels to transmit the first signals in sequence.

In another example, a switching device provided in a signal transceiving circuit includes a first switching unit and a second switching unit. Referring to Fig. 5 for the specific structure, a target signal channel for transmitting a second signal is selected by controlling the first switching unit, and a first candidate signal or a second candidate signal accessing the target signal channel is selected as the second signal by controlling the second switching unit.

In this embodiment, a signal channel for transmitting a second signal is selected according to first performance parameters of N signal channels, so that when the second signal is transmitted in the selected signal channel, data transmission performance of a signal transceiving circuit satisfies a pre-set requirement, for example, satisfying a requirement that overall data transmission performance is optimal.

A sixth embodiment of the present disclosure relates to a signal transceiving method based on a signal transceiving circuit. The sixth embodiment is substantially the same as the fifth embodiment. The difference lies in that, in this embodiment, it is first determined whether performance of N signal channels in transmitting a first signal is balanced, when balancing, acquiring second performance parameters of N signal channels when respectively transmitting a first signal and a second signal at the same time, and determining a target signal channel according to the second performance parameter.

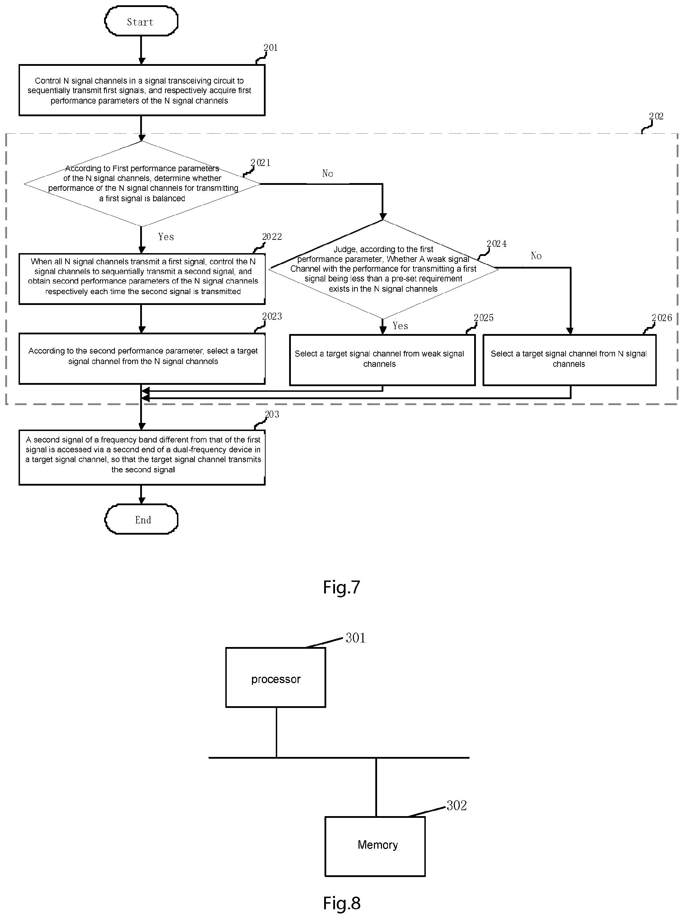

The specific flow of the signal transceiving method based on the signal transceiving circuit in this embodiment is shown in Fig. 7.

Steps 201 and 203 are substantially the same as steps 101 and 103, and are different in that step 202 includes the following substeps.

Sub-Step 2021, judging whether the performance of the N signal channels for transmitting the first signals is balanced according to the first performance parameters of the N signal channels, and if so, going to sub-Step 2022; if not, go to sub-step 2024.

In an example, a variance value of the first performance parameter of the N signal channels may be calculated, and it is determined, according to the variance value, whether performance of transmitting the first signal of the N signal channels is balanced. For example, the variance values of the RSRP of the N signal channels are calculated; when the calculated variance value of the RSRP is less than a pre-set threshold value, it indicates that the performance of the N signal channels in transmitting the first signal is balanced; and when the calculated variance value of the RSRP is greater than or equal to the pre-set threshold value, it indicates that the performance of the N signal channels in transmitting the first signal is unbalanced.

Sub-Step 2022, when the N signal channels all transmit the first signal, controlling the N signal channels to sequentially transmit the second signal, and at each time of transmitting the second signal, respectively acquiring the second performance parameters of the N signal channels as a group of the second performance parameters.

Taking four signal channels as an example, please refer to Fig. 2. After it is determined that the performance of transmitting the first signal on the four signal channels is balanced, when all four signal channels transmit a first signal, controlling the four signal channels to transmit a second signal in sequence, when a first signal and a second signal are transmitted simultaneously in a signal channel 3-1 and only the first signal is transmitted in the remaining signal channels, acquiring second performance parameters A1-1, A1-2, A1-3 and A1-4 respectively obtained by four signal channels; when a first signal and a second signal are transmitted simultaneously in a signal channel 3-2 and only the first signal is transmitted in the remaining signal channels, acquiring second performance parameters A2-1, A2-2, A2-3 and A2-4 respectively obtained by four signal channels, and so on, until four groups of second performance parameters are acquired. In one example, the second performance parameter may be a data throughput and/or a signal-to-noise ratio.

Sub-Step 2023, selecting the target signal channel from the N signal channels according to the N sets of second performance parameters corresponding to the N signal channels respectively.

Specifically, the four groups of second performance parameters are processed respectively to obtain four second performance parameter evaluation values respectively corresponding to four signal channels when a second signal is transmitted, and then a target signal channel with a second performance parameter evaluation value satisfying a condition is selected from the four signal channels. A variance value of four second performance parameters in each group can be calculated, and the calculated variance value is taken as a second performance parameter evaluation value of each signal channel when a second signal is transmitted in each corresponding signal channel. When the obtained variance value is smaller, it indicates that a difference between the four corresponding second performance parameters is small, and the four second performance parameters are relatively stable. Therefore, a signal channel with a minimum variance value may be selected from four signal channels as a target signal channel, so as to ensure stability of data transmission performance of the four signal channels as far as possible.

For example, the variances of A1-1, A1-2, A1-3 and A1-4 are calculated to obtain a first variance value, and then a second performance parameter evaluation value of the signal channel 3-1 is the first variance value; calculating the variances of A2-1, A2-2, A2-3 and A2-4 to obtain a second variance value, the second performance parameter evaluation value of the signal channel 3-2 being the second variance value, and the method for acquiring the second performance parameter evaluation values of the remaining channels being the same. When the first variance value is the smallest, it indicates that differences between A1-1, A1-2, A1-3 and A1-4 are the smallest, four second performance parameters of the signal channel 3-1 are relatively stable, and therefore the signal channel 3-1 is selected as the target signal channel.

In addition, when the second performance parameter is a data throughput of four signal channels, a sum of four data throughputs in each group may be calculated, and the sum of the calculated data throughputs is used as a second performance parameter evaluation value of each corresponding signal channel. For example, the second performance parameter evaluation value of the signal channel 3-1 is a sum of data throughputs obtained by summing A1-1, A1-2, A1-3, and A1-4. When a certain signal channel transmits a first signal and a second signal at the same time, the greater the sum of data throughputs of four signal channels is, which indicates that when the channel transmits the first signal and the second signal at the same time, the greater the data throughput of the signal transceiving circuit . Therefore, a signal channel with the largest sum of data throughputs may be selected from four signal channels as a target signal channel, so as to improve data transmission performance of the signal transceiving circuit as far as possible.

In addition, when the second performance parameter is a signal-to-noise ratio of four signal channels, an average value of the four signal-to-noise ratio in each group may be calculated, and the average value of the signal-to-noise ratio obtained through calculation is used as a second performance parameter evaluation value of each corresponding signal channel. For example, the second performance parameter evaluation value of the signal channel 3-1 is an average value of signal-to-noise ratio obtained by averaging A1-1, A1-2, A1-3, and A1-4. When a certain signal channel transmits the first signal and the second signal at the same time, the smaller the average value of the signal-to-noise ratio of the four signal channels is, which indicates that when the channel transmits the first signal and the second signal at the same time, the smaller the degree of interference suffered by the four signal channels is. Therefore, a signal channel with the smallest average value of signal-to-noise ratio among four signal channels may be selected as a target signal channel, so as to reduce the interference suffered by the four signal channels as far as possible, and improve the data transmission performance of a signal transceiving circuit.

In addition, when an extreme value exists in a group of second performance parameters, a signal channel corresponding to the group of second performance parameters is not selected as a target signal channel. Taking the signal-to-noise ratio of the signal channel as an example of the second performance parameter, when the signal-to-noise ratio of the conventional transmission signal is about 10 dB, and the second performance parameters A1-1, A1-2, A1-3, and A1-4 corresponding to the signal channel 3-1 are 10.1 dB, 9.5 dB, 2 dB, and 10.3 dB respectively. It can be seen that, when the signal channel 3-1 simultaneously transmits the first signal and the second signal, and the remaining signal channels only transmit the first signal, a signal-to-noise ratio of a signal transmitted by the signal channel 3-3 is 2 dB, which is far lower than a signal-to-noise ratio of a conventional signal transmitted. In this case, in order to ensure that transmission performance of each signal channel is not greatly affected, the signal channel 3-1 is not selected as a target signal channel.

Sub-Step 2024, determining whether a weak signal channel whose performance for transmitting the first signal is less than the preset required signal channel exists among the N signal channels according to the first performance parameter, and if the weak signal channel exists, going to sub-Step 2025; if there is no weak signal channel, go to sub-step 2026.

Sub-Step 2025, select a target signal channel from the weak signal channels.

Specifically, when it is determined that the performance for transmitting the first signal in the N signal channels is unbalanced, it is determined, according to the first performance parameter, whether a weak signal channel whose performance for transmitting the first signal is less than the preset requirement exists in the N signal channels. When a weak signal channel which performance for transmitting the first signal through the signal channel is less than the preset requirement exists, it may be considered that the weak signal channel is in a state in which the first signal cannot be transmitted normally. For example, in a modulation manner of a 100MHz bandwidth and 256QAM, an RSSI of a certain signal channel is lower than -70dBm, where the RSSI represents performance of transmitting a first signal in the signal channel, and -70dBm is a preset requirement. In this case, it is considered that the signal channel is a weak signal channel that cannot normally transmit the first signal; therefore, in the weak signal channel that cannot normally transmit the first signal, a target signal channel used for transmitting the second signal is selected, so as to avoid, as far as possible, an impact of transmitting the second signal on transmission performance of other channels that normally transmit the first signal.

In an example, when it is determined that performance of N signal channels in transmitting the first signal is unbalanced, the target signal channel may also be directly selected from the N signal channels.

Sub-Step 2026, select a target signal channel from the N signal channels.

When there is no weak signal channel, it indicates that the N signal channels are all in a state of normally transmitting a first signal, and a target signal channel for transmitting a second signal is selected from the N signal channels.

In an example, when there is no weak signal channel, it indicates that the N signal channels are all in a state of normally transmitting the first signal, and one signal channel may be randomly selected from the N signal channels as the target signal channel; the signal channel with the best performance for transmitting the first signal among the N signal channels may also be selected as the target signal channel, where the "signal channel with the best performance for transmitting the first signal" refers to a signal channel complying with a preset rule, and the preset rule may be specifically set according to an actual disclosure scenario, for example: a signal channel with the best performance for transmitting a first signal may be understood as a signal channel with the strongest anti-interference capability, and a signal channel with the strongest anti-interference capability is selected as a target signal channel, so as to avoid, as far as possible, the influence of a second signal on the first signal caused by the second signal when other signal channels with a non-strong anti-interference capability simultaneously transmit the first signal and the second signal.

For example, in a modulation manner of a 100MHz bandwidth and 256QAM, when an RSSI of a certain signal channel is less than -70dBm, the signal channel is considered to be a weak signal channel that cannot normally transmit a first signal; when such a weak signal channel exists, at least one signal channel is selected from the weak signal channels as a target signal channel; when an RSSI of a certain signal channel is greater than-40 dBm, the signal channel is considered to be a strong signal channel capable of normally transmitting a first signal, and the capability of the channel for transmitting the first signal is relatively strong; when such a strong signal channel exists, a signal channel with the best performance for transmitting the first signal is selected from the strong signal channel as a target signal channel; when RSSIs of the N signal channels are all higher than -70 dBm but lower than -40 dBm, a target signal channel for transmitting a second signal may be randomly selected from the four signal channels.

In this embodiment, it is determined whether performance of transmitting a first signal by N signal channels is balanced, and when the performance is balanced, a second performance parameter is acquired when the N signal channels simultaneously transmit the first signal and a second signal respectively, and a target signal channel is determined according to the second performance parameter; when there is no balance, determining whether there is a weak signal channel incapable of normally transmitting a first signal, and when there is a weak signal channel, selecting at least one signal channel from the weak signal channel as a target signal channel, so as to avoid as far as possible the influence of transmitting a second signal on the transmission performance of other channels for normally transmitting the first signal; when there is no weak signal channel, a signal channel with the best performance for transmitting the first signal is selected as the target signal channel, so as to avoid, as far as possible, a situation in which the signal channel in a state of normally transmitting the first signal, after transmitting the second signal, is in a state of not normally transmitting the first signal, thereby maximally ensuring a data throughput. The present embodiment relates to various conditions related to performance parameters of N signal channels, corresponds to different methods for selecting a target signal channel, and aims to better data transmission performance of a signal transceiving circuit as far as possible.

A seventh embodiment of the present disclosure relates to a terminal. As shown in Fig. 8, the terminal includes: at least one processor 301; and a memory 302 communicatively connected to the at least one processor 301; the memory 302 stores an instruction that can be executed by the at least one processor 301, where the instruction is executed by the at least one processor 301, so that the at least one processor 301 can execute the signal transceiving method based on a signal transceiving circuit according to any one of the third embodiment and the fourth embodiment.

The memory and the processor are connected in a bus manner, the bus may include any number of interconnected buses and bridges, and the bus connects various circuits of the one or more processors and the memory together. The bus may also connect a variety of other circuits, such as peripheral devices, voltage regulators, and power management circuitry, which are well known in the art and therefore are not described further herein. The bus interface provides an interface between the bus and the transceiver. A transceiver may be one element or multiple elements, such as multiple receivers and transmitters, which provide a means for communicating with various other devices over a transmission medium. Data processed by a processor is transmitted on a wireless medium through an antenna, and further, the antenna receives the data and transmits the data to the processor.

The processor is responsible for managing a bus and general processing, and can further provide various functions, including timing, peripheral interfaces, voltage regulation, power management, and other control functions. And the memory may be used to store data used by the processor in performing operations.

An eighth embodiment of the present disclosure relates to a computer readable storage medium, which stores a computer program. The computer program implements the foregoing method embodiments when being executed by a processor.

That is, a person skilled in the art may understand that all or a part of the steps of the methods in the foregoing embodiments may be implemented by a program instructing relevant hardware. The program is stored in a storage medium and includes several instructions for instructing a device (which may be a single chip, a chip, or the like) or a processor to execute all or a part of the steps of the methods in the embodiments of the present disclosure. The foregoing storage medium includes: any medium that can store program codes, such as a USB flash disk, a removable hard disk, a Read-Only Memory (ROM), a Random Access Memory (RAM), a magnetic disk, or an optical disk.

A person of ordinary skill in the art may understand that the foregoing embodiments are specific embodiments for implementing the present disclosure, and in practical disclosures, various changes may be made in form and details without departing from the spirit and scope of the present disclosure.

## Claims

1. A signal transceiving circuit, comprising: N dual-frequency devices and N antennas; N is an integer greater than or equal to 2;
the N dual-frequency devices have a first end, a second end, and a third end respectively; the third ends of the N dual-frequency devices are correspondingly connected to the N antennas respectively to form N signal channels;
the N signal channels are respectively configured to transmit a first signal, and the first end of a dual-frequency device in the N signal channels is used for accessing the first signal;
at least one signal channel among the N signal channels is further configured to transmit a second signal, and the second end of the dual-frequency device in the signal channel configured to transmit the second signal is configured to access the second signal; wherein a frequency band of the first signal is different from a frequency band of the second signal.

2. The signal transceiving circuit according to claim 1, wherein the signal transceiving circuit further comprises a switching device;
the second ends of the N dual-frequency devices are respectively connected to the switching device;
the switching device is configured to connect the second signal to a dual-frequency device in a target signal channel; the target signal channel refers to the signal channel for transmitting the second signal.

3. The signal transceiving circuit according to claim 2, wherein the switching device comprises a first switching unit and N second switching units; and the N second switching units have a first end, a second end and a third end;
the third ends of the N second switching units are correspondingly connected to the second ends of the dual-frequency devices in the N signal channels respectively; the first ends of the N second switching units are respectively connected to the first switching unit, the first switching unit is configured to connect a first candidate signal to the second switching unit corresponding to the target signal channel, and the second ends of the N second switching units are respectively configured to connect a second candidate signal; and
the N second switching units are configured to take the first candidate signal or the second candidate signal as the second signal to access the dual-frequency device in the target signal channel.

4. The signal transceiving circuit according to claim 3, wherein a frequency band of the first candidate signal at least partially overlap with a frequency band of the second candidate signal, and the first signal and the first candidate signal are signals of different network types.

5. The signal transceiving circuit according to any one of claims 1 to 4, wherein the first signal and the second signal are signals of adjacent frequency bands; or the first signal and the second signal are signals of two frequency bands having mutual interference.

6. A circuit board assembly, comprising the signal transceiving circuit according to any one of claims 1 to 5.

7. A signal transceiving method based on a signal transceiving circuit,the signal transceiving circuit comprises N dual-frequency devices and N antennas, wherein the N dual-frequency devices respectively have a first end, a second end and a third end, and the third ends of the N dual-frequency devices are correspondingly connected to the N antennas respectively to form N signal channels; the method comprises:
controlling the N signal channels in the signal transceiving circuit to sequentially transmit first signal, and respectively acquiring first performance parameters of the N signal channels; wherein the first end of the dual-frequency devices in the N signal channels is configured to access the first signal;
selecting a target signal channel according to the first performance parameters of the N signal channels; and
transmitting a second signal through the target signal channel, wherein the second end of the dual-frequency devices in the target signal channel is configured to access the second signal; wherein the first signal and the second signal have different frequency bands.

8. The signal transceiving method according to claim 7, wherein selecting a target signal channel according to the first performance parameters of the N signal channels comprises:
determining, according to the first performance parameters of the N signal channels, whether performance of transmitting the first signal by the N signal channels is balanced;
in a case that the performance of the N signal channels in transmitting the first signal is balanced, and when the N signal channels all transmit the first signal, the N signal channels are controlled to sequentially transmit the second signal, and a second performance parameters of the N signal channels are respectively acquired each time the second signal is transmitted; wherein the second performance parameters of the N signal channels acquired when the second signal is transmitted in each signal channel is recorded as a group of the second performance parameters corresponding to each signal channel; and
selecting the target signal channel from the N signal channels according to N groups of the second performance parameters respectively corresponding to the N signal channels.

9. The signal transceiving method according to claim 8, wherein the selecting the target signal channel from the N signal channels according to N groups of the second performance parameters respectively corresponding to the N signal channels comprises:
obtaining, according to the N groups of the second performance parameters, N second performance parameter evaluation values respectively corresponding to when the second signal is transmitted in the N signal channels; and
selecting the target signal channel from the N signal channels according to the N second performance parameter evaluation values.

10. The signal transceiving method according to claim 8 or 9, wherein the second performance parameter is a data throughput and/or a signal-to-noise ratio of the N signal channels.

11. The signal transceiving method according to any one of claims 8 to 10, wherein after the determining, according to performance parameters corresponding to the N signal channels, whether performance of transmitting the first signal by the N signal channels is balanced, the method further comprises:
in a case that the performance of transmitting the first signal by the N signal channels is unbalanced, determining, according to the first performance parameter, whether there is a weak signal channel among the N signal channels, wherein the weak signal channel refers to a signal channel of which the performance of transmitting the first signal is less than a pre-set requirement;and
in a case that the weak signal channel exists, selecting the target signal channel from the weak signal channel.

12. The signal transceiving method according to claim 11, wherein after determining, according to the first performance parameter, whether there is a weak signal channel among the N signal channels, the method further comprises:
in a case that the weak signal channel does not exist, selecting the target signal channel from the N signal channels.

13. The signal transceiving method according to claim 11, wherein when there is no weak signal channel, selecting the target signal channel from the N signal channels comprises:
in a case that the weak signal channel does not exist, selecting, from the N signal channels, a signal channel with the best performance for transmitting the first signal as the target signal channel according to the first performance parameter.

14. A terminal, comprising:
at least one processor; and,
a memory communicatively coupled to the at least one processor; wherein,
the memory stores an instruction executable by the at least one processor, wherein the instruction is executed by the at least one processor, so that the at least one processor is configured to execute the signal transceiving method according to any one of claims 7 to 13.

15. A computer readable storage medium, storing a computer program, the computer is configure to, when the computer program is executed by a processor, cause the processor to implement the signal transceiving method as claimed in any one of claims 7 to 13.
